# EUROPEAN PATENT APPLICATION

(11) **EP 4 787 553 A1**
(43) Date of publication of application: **05.08.2026**
(21) Application number: 25155024.0
(22) Date of filing: 30.01.2025
(51) Int. Cl.: H01M 10/658, H01M 50/24, H01M 50/209, H01M 50/591, H01M 10/613, H01M 50/271, H01M 50/291

(54) **BATTERY PACK ARRAY PROTECTION**

(71) Applicant: Ford Global Technologies, LLC, Dearborn, MI 48126 (US)
(72) Inventor: COX, David, London, SE16 5XJ (GB); PETRIDIS, Themi, Bishop's Stortford, CM23 3NG (GB); ETHERIDGE, Paul, Crowborough, TN6 2EA (GB); STOTHARD, Christopher, Billericay, CM11 2DR (GB)
(74) Representative: HG Law International LLP

(57) **Abstract**

The present disclosure provides a battery pack comprising a plurality of battery arrays arranged in first and second rows within the battery pack. Each battery array has an inside wall, an outside wall, a top surface, and first and second sidewalls. The battery arrays of the first and second rows are positioned with their inside walls facing each other. At least a portion of the inside wall and at least a portion of the top surface of an opposing pair of battery arrays from the first and second rows is covered in a silicate sheet. The silicate sheet provides thermal protection and insulation between the battery arrays.

## Description

### FIELD OF INVENTION

The present disclosure relates to battery packs, and more particularly to a battery pack and vehicle comprising a plurality of battery arrays with protective silicate sheets covering portions of the arrays.

### BACKGROUND

Battery packs, particularly those used in electric vehicles and large-scale energy storage systems, are complex assemblies that include multiple battery cells or modules arranged in arrays. These arrays are typically housed within a protective casing that also accommodates various electrical connections and thermal management components. It is desirable to operate these battery packs as safely and efficiently as possible, especially given the high energy densities.

One significant challenge in the design and operation of battery packs is managing the heat and gases generated during cell venting. When a battery cell undergoes thermal runaway, it can release hot gases that need to be vented out of the battery pack. However, the paths that these gases take can inadvertently lead to heating of adjacent cells or components.

### SUMMARY OF INVENTION

This Summary is provided to introduce a selection of concepts in a simplified form that are further described below in the Detailed Description.

In a first aspect, a battery pack is provided. The battery pack comprises a plurality of battery arrays each having an inside wall, an outside wall, a top surface, and respective first and second sidewalls, the battery arrays being arranged in a first row and a second row within the battery pack. The battery arrays of the first row and the battery arrays of the second row are positioned such that the inside walls of the battery arrays of the first row and the inside walls of the battery arrays of the second row face together, wherein at least a portion of the inside wall and at least a portion of the top surface of an opposing pair of battery arrays of the first and second rows of the plurality of the battery arrays is covered in a silicate sheet.

This configuration provides thermal protection for components of the battery pack by shielding them from hot exhaust gases during cell venting events. The silicate sheet acts as a barrier to reduce heat transfer and protect areas from potential damage. The silicate sheet may also offer protection from debris and/or build-up of debris on sensitive components within the battery pack.

The silicate sheet may cover substantially all of the inside wall of each array of the opposing pair of battery arrays.

Covering a larger area of the inside wall with the silicate sheet enhances the performance of the battery pack, e.g., by providing more thermal protection.

The silicate sheet which covers at least a portion of the top surface of the pair of battery arrays may include a terminal cover.

The terminal cover provides additional protection for electrical connections, enhancing the battery pack's performance during thermal events.

The terminal cover may be configured to cover a low voltage terminal of each of the opposing pair of battery arrays.

Protecting low voltage terminals helps maintain the integrity of control and monitoring systems during thermal events.

The terminal cover may be configured to cover a high voltage terminal of each of the opposing pair of battery arrays.

Shielding high voltage terminals enhances overall battery pack safety.

The silicate sheet may be folded to cover the inside wall and at least a portion of the top surface of each of the opposing pair of battery arrays.

Folding the silicate sheet provides a continuous protective layer, eliminating gaps and improving overall thermal protection.

The silicate sheet which covers a first array of the opposing pair of battery arrays may be the same sheet which covers a second array of the opposing pair of battery arrays.

Using a single sheet for both arrays simplifies assembly and reduces the number of components, potentially enhancing manufacturability.

The silicate sheet may be folded to cover the inside walls and at least a portion of the top surfaces of each of the first and second arrays of the opposing pair of battery arrays.

This configuration creates a unified thermal barrier for both arrays, enhancing protection and simplifying the overall design.

The battery pack may further comprise a base plate on which each of the battery arrays is positioned, and wherein the silicate sheet which covers the inside wall of each array reaches substantially all of the way to the base plate.

Extending the silicate sheet to the base plate provides comprehensive thermal protection along the entire height of the battery arrays.

Each opposing pair of battery arrays of the first and second rows of the plurality of the battery arrays may be covered in a silicate sheet.

Applying the silicate sheet protection to all opposing pairs of arrays ensures consistent thermal management throughout the battery pack.

The silicate sheet may extend to cover at least a portion of the respective first and second sidewalls of each of the opposing pair of battery arrays.

Covering portions of the sidewalls provides additional thermal protection and helps contain potential thermal events.

The silicate sheet may be a mica sheet.

Mica offers excellent thermal insulation properties and is well-suited for high-temperature applications in battery packs.

The terminal cover may be formed of mica.

Using mica for the terminal cover ensures consistent thermal protection properties across the entire protective assembly.

The mica sheet may further include mica tape where the mica sheet is folded.

Mica tape reinforces folded areas, maintaining the integrity of the thermal barrier at potential weak points.

In a second aspect, a vehicle comprising the battery pack of the first aspect is provided.

### BRIEF DESCRIPTION OF FIGURES

Embodiments of the invention will be described, by way of example, with reference to the following drawings, in which:
FIG. 1 illustrates an isometric view of a silicate sheet configured for use with a battery array, according to aspects of the present disclosure.
FIG. 2 illustrates an isometric view of an integrated silicate sheet configured for use with a battery array, according to aspects of the present disclosure.
FIG. 3 illustrates an orthogonal side view of a battery pack configuration, according to aspects of the present disclosure.
FIGS. 4A-4B illustrate orthogonal side views of battery arrays with protective folded silicate sheets, according to aspects of the present disclosure.
FIGS. 5A-5C illustrate arrangements of silicate sheets for battery arrays, according to aspects of the present disclosure.
FIG. 6 illustrates an isometric view of a silicate sheet configuration with protective components, according to aspects of the present disclosure.
FIG. 7 illustrates a side view outline of a vehicle with a battery pack, according to aspects of the present disclosure.

Common reference numerals are used throughout the figures to indicate similar features.

### DETAILED DESCRIPTION

In an example, a silicate sheet 100 is configured for use with a battery array. The silicate sheet 100 comprises a top surface 140 and an outside wall 150. In some examples, the top surface 140 and the outside wall 150 may be formed of separate portions or formed of a folded silicate sheet 220 that forms the structure.

At a first end of the silicate sheet 100, a deflector portion 130 is provided. The deflector portion 130 is shaped and configured to cover or protect a battery terminal of a battery array or a battery module. On the opposite end, another deflector portion 120 is provided, which serves a similar purpose. In some examples, the deflector portion 130 is shaped to cover or protect a high voltage terminal, and the deflector portion 120 is shaped to cover or protect a low voltage terminal.

Brackets 225 may connect the top surface 140 and the outside wall 150 of the silicate sheet 100. The brackets 225 may be used if the silicate sheet 100 is formed of two parts, or may be used if the silicate sheet 100 is formed of one part and requires reinforcement.

An attachment arrangement 226 may be provided on the silicate sheet 100. The attachment arrangement 226 may be used to attach the silicate sheet 100 to a battery array.

The silicate sheet 100 may be configured to wrap around and protect various surfaces of a battery array. The folded silicate sheet 220, in conjunction with the top surface 140 and outside wall 150, creates a protective enclosure for the battery components. The silicate sheet 100 may cover at least a portion of an inside wall and a top surface of an opposing pair of battery arrays.

In some examples, the silicate sheet 100 may be a solid metal box style deflector. The silicate sheet 100 may have closed wall areas to protect components. In other examples, the silicate sheet 100 may be made of metal with mica affixed to it.

The silicate sheet 100 may be configured to cover substantially all of an inside wall of each array of an opposing pair of battery arrays. The silicate sheet 100 may also extend to cover at least a portion of respective first and second sidewalls of each of the opposing pair of battery arrays.

In an example, an integrated silicate sheet 102 is configured for use with a battery array. The integrated silicate sheet 102 comprises a top surface 142 and an outside wall 152. The top surface 142 and the outside wall 152 may be formed of a folded silicate sheet 222 that forms the structure.

The folded silicate sheet 222 extends along the length of the integrated silicate sheet 102. The folded silicate sheet 222 forms the base and connects to other components of the assembly.

At a first end of the integrated silicate sheet 102, a silicate deflector portion 132 is provided. The silicate deflector portion 132 is shaped and configured to cover or protect a battery terminal of a battery array or a battery module. On the opposite end, another silicate deflector portion 122 is provided, which serves a similar purpose. In some examples, the silicate deflector portion 132 is shaped to cover or protect a high voltage terminal, and the silicate deflector portion 122 is shaped to cover or protect a low voltage terminal.

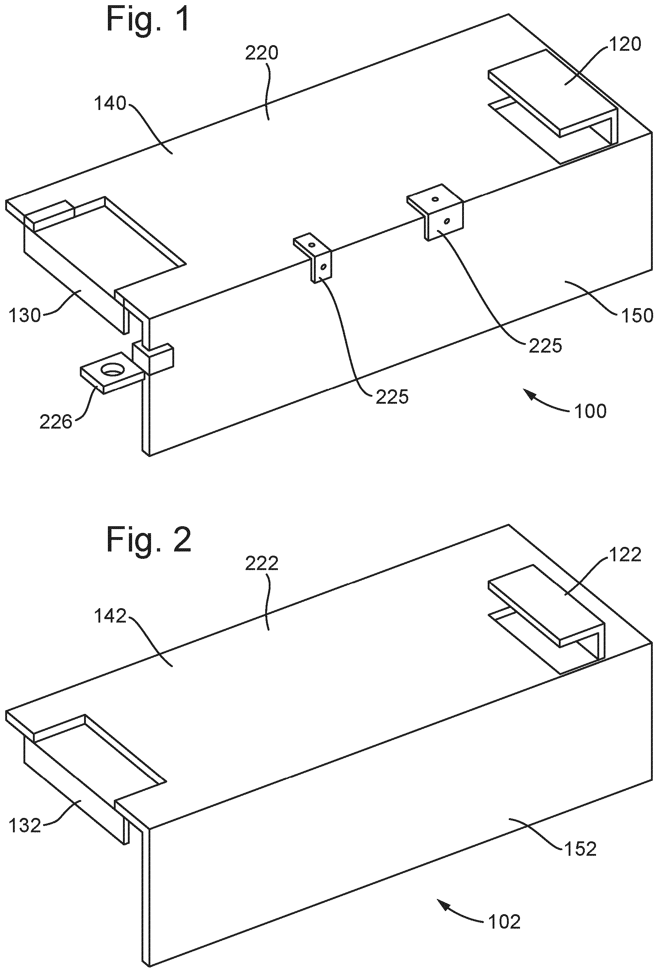

In general, the deflector portions 120, 122 may include a top portion as shown in FIG. 1 and FIG. 2. In some examples, the deflector portions 120, 122 may not include a top portion.

The integrated silicate sheet 102 may be configured to wrap around and protect various surfaces of a battery array. The folded silicate sheet 222, in conjunction with the top surface 142 and outside wall 152, creates a protective enclosure for the battery components. The integrated silicate sheet 102 may be designed to prevent venting upwards into a battery pack cover.

In some examples, the integrated silicate sheet 102 may be 3D-moulded into a U or W shape. This configuration may enhance the protective capabilities of the integrated silicate sheet 102 and facilitate its integration with the battery array or module.

The integrated silicate sheet 102 may include an attachment arrangement for securing the integrated silicate sheet 102 to a battery array or module. The attachment arrangement may be similar to the attachment arrangement 226 described in connection with the silicate sheet 100.

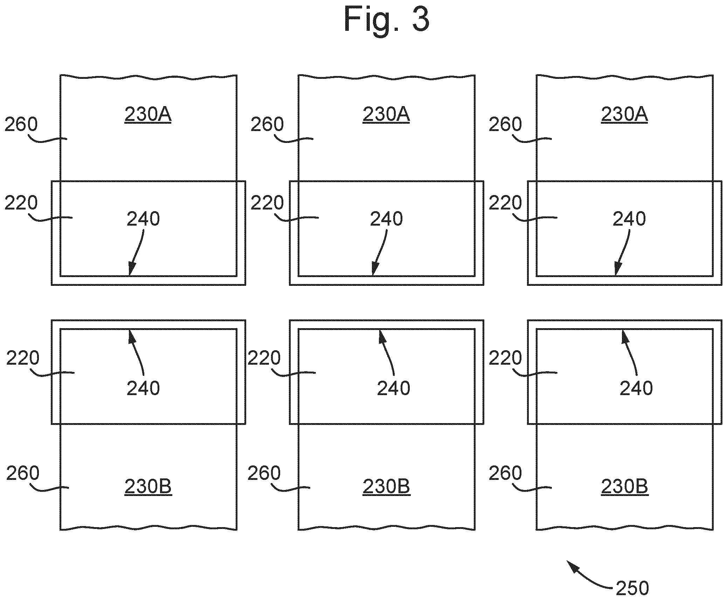

In an example, a battery pack 250 comprises a plurality of battery arrays arranged in a first row and a second row. FIG. 3 illustrates an orthogonal side view of the battery pack 250 configuration, showing multiple arrangements of battery arrays.

The battery pack 250 includes a first row array 230A and a second row array 230B. The first row array 230A and the second row array 230B each have an inside wall 240 and a top surface 260. The first row array 230A and the second row array 230B are positioned such that the inside wall 240 of the first row array 230A faces the inside wall 240 of the second row array 230B.

A folded silicate sheet 220 is provided at the bottom corners of each array configuration. The folded silicate sheet 220 wraps around the bottom edge of the inside wall 240, providing thermal protection to the opposing inside walls 240 of the first row array 230A and the second row array 230B.

The folded silicate sheet 220 covers at least a portion of the inside wall 240 of each array. In some examples, the folded silicate sheet 220 covers substantially all of the inside wall 240 of each array. The folded silicate sheet 220 may extend to cover at least a portion of respective first and second sidewalls of each of the opposing pair of battery arrays.

In some examples, a base plate is provided on which each of the battery arrays is positioned. The folded silicate sheet 220 which covers the inside wall 240 of each array may reach substantially all of the way to the base plate.

The folded silicate sheet 220 provides arrangements for protecting or insulating the battery arrays within the battery pack 250. The folded silicate sheet 220 may be configured to wrap around and protect various surfaces of the battery arrays, creating a protective enclosure for the battery components.

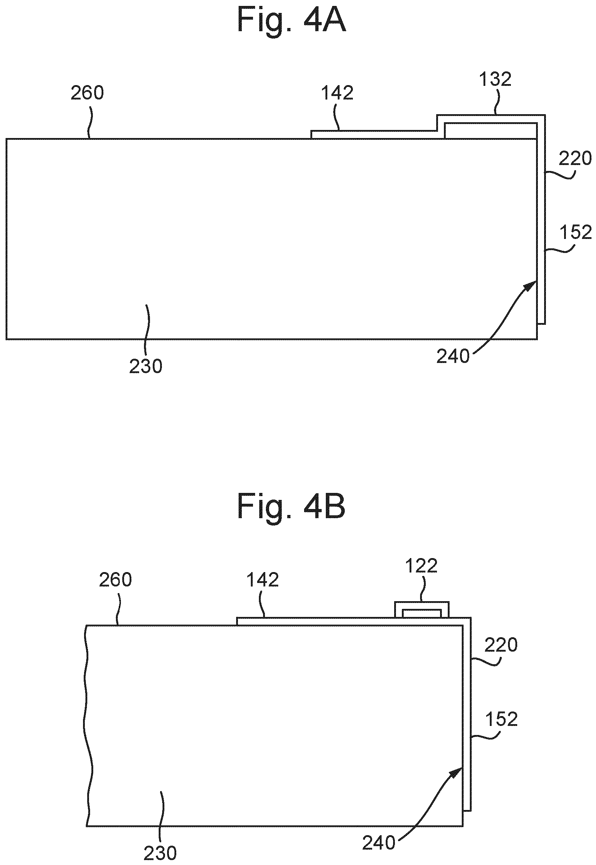

In an example, a battery array 230 is provided with a protective folded silicate sheet 220. FIG. 4A and FIG. 4B illustrate orthogonal side views of the battery array 230 with the protective folded silicate sheet 220.

At the top right corner of the battery array 230, the silicate deflector portion 132 forms part of the folded silicate sheet 220. The silicate deflector portion 132 is positioned, shaped and configured to cover or protect a battery terminal of the battery array 230.

Adjacent to the silicate deflector portion 132, the top surface 142 of the folded silicate sheet 220 is visible. The top surface 142 sits atop the top surface 260 of the battery array 230. The top surface 142 extends horizontally, covering at least a portion of the top of the battery array 230.

The outside wall 152 of the folded silicate sheet 220 covers the right side of the battery array 230. The inside wall 240 of the battery array 230 is at the right side of the battery array 230. The inside wall 240 may face another battery array 230 when assembled into the battery pack 250.

The folded silicate sheet 220 wraps around the top and the inside wall 240 of the battery array 230. The folded silicate sheet 220 covers substantially all of the inside wall 240 of each array of an opposing pair of battery arrays.

In some examples, the folded silicate sheet 220 is folded to cover the inside walls 240 and at least a portion of the top surfaces 260 of both arrays in an opposing pair of battery arrays. The folded silicate sheet 220 may be a single sheet that covers both arrays in the opposing pair.

FIG. 4B presents a similar configuration to FIG. 4A, with a different silicate deflector portion 132. The different silicate deflector portion 132 may be part of a different type of battery array 230 or may be configured to protect a different terminal type.

The folded silicate sheet 220 provides protection for the battery array 230, including the inside wall 240 and at least a portion of the top surface 260. The silicate deflector portion 132 offers additional protection for the battery terminals, which may be particularly sensitive components of the battery array 230.

In some examples, the folded silicate sheet 220 may extend onto the sides of the battery array 230 as well as the top surface 260 and the inside wall 240 of the battery array 230. The folded silicate sheet 220 may extend partially along the sides of the battery array 230, may reach partially from the top surface 260 of the battery array 230, and in some examples may cover all or part of the sides of the battery array and may extend from the top of the battery array 230 to the bottom of the battery array 230 on the sides thereof.

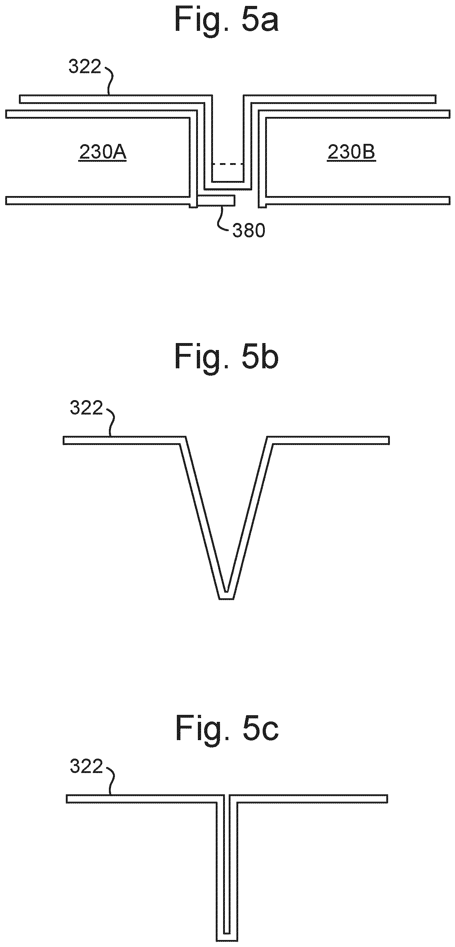

In Figs. 5A-5C, various configurations of a silicate sheet 322 are illustrated, demonstrating their placement and protective benefits for battery arrays. The silicate sheet 322 is designed to extend over the top of two adjacent battery arrays, specifically a first row array 230A and a second row array 230B, and down between them, providing coverage for the top and inner surfaces of these arrays.

In Fig. 5A, the silicate sheet 322 is shown as a single-piece that spans across the top of both the first row array 230A and the second row array 230B. This configuration allows the silicate sheet 322 to form a barrier between the two arrays, enhancing thermal and electrical isolation. The silicate sheet 322 may reach all the way to the base of the battery pack, depending on the specific design requirements. However, in some configurations, as indicated by a dotted line, the silicate sheet 322 may not extend fully to the base to avoid interference with other components or materials.

The potential use of a thermal interface material 380 is depicted in Fig. 5A, positioned between the bottom surfaces of the arrays 230A, 230B and the base of the battery pack. This material serves to enhance thermal management within the battery pack by facilitating heat transfer away from the battery arrays. If the silicate sheet 322 were to extend to the base of the battery pack, it could potentially come into contact with the thermal interface material 380, which might lead to contamination to the silicate sheet 322. Therefore, in some designs, the silicate sheet 322 may terminate just short of the base.

Fig. 5B shows the silicate sheet 322 prior to installation, illustrating its V-shape configuration. This pre-installation view provides insight into the flexibility and adaptability of the silicate sheet 322 in accommodating different battery pack designs and assembly processes.

In Fig. 5C, the silicate sheet 322 is depicted in a folded configuration, ready to be placed onto the arrays 230A, 230B. Once installed, it extends horizontally across the top of both arrays and then drops down vertically between them, effectively dividing the first row array 230A from the second row array 230B. This arrangement not only provides thermal and electrical insulation but also enhances the structural integrity of the battery pack by maintaining a defined separation between the arrays.

These configurations of the silicate sheet 322, as shown in Figs. 5A-5C, underscore its role in providing essential protection and insulation for the battery arrays within the battery pack. The design considerations, including the optional use of thermal interface material 380 and the strategic termination of the silicate sheet 322, highlight the careful balance between protection, functionality, and manufacturability in battery pack design.

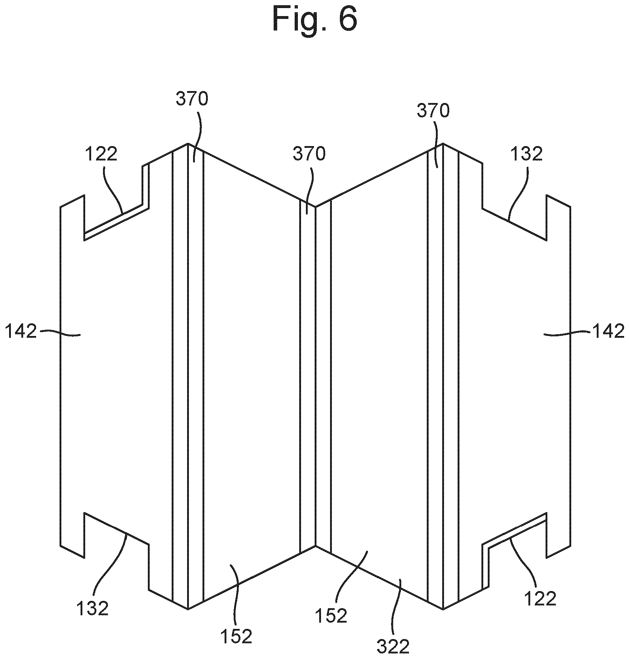

In FIG. 6, a comprehensive protective enclosure is formed by a silicate sheet 322, which includes various components designed to enhance the protection of battery arrays. The silicate sheet 322 is configured as a continuous piece that wraps around and connects multiple sections of the assembly, forming the main body of the structure. This configuration provides a robust barrier against environmental and operational hazards that may impact the battery arrays.

The silicate sheet 322 incorporates silicate deflector portions 122 and 132 at the top corners of the structure. These silicate deflector portions are equipped with raised sections and are strategically designed to cover or protect battery terminals. The inclusion of silicate deflector portions 122 and 132 ensures that sensitive areas of the battery arrays, particularly the terminals, are shielded, thereby enhancing the performance of the battery system.

Additionally, the silicate sheet 322 features top surfaces 142 and outside walls 152. The top surfaces 142 extend horizontally, forming part of the upper boundary of the battery array enclosure, while the outside walls 152 create the exterior surfaces of the enclosure. This arrangement not only provides physical protection but also contributes to the thermal management of the battery arrays by minimizing direct heat transfer to components.

An important structural enhancement is provided by the inclusion of a silicate tape 370. This silicate tape is applied over portions of the silicate sheet 322 where it is folded or joined. The use of silicate tape 370 reinforces these areas, potentially enhancing the structural integrity of the assembly and ensuring a durable bond at the folds and joints. This reinforcement is helpful in maintaining the protective capabilities of the silicate sheet 322 over extended periods and under various operational conditions.

The configuration of the silicate sheet 322 as described in FIG. 6, with its integrated protective components and structural enhancements, plays a role in safeguarding the battery arrays within the battery pack. By forming a protective enclosure, the silicate sheet 322 effectively mitigates physical damage, thermal effects, and electrical hazards, thereby contributing to the overall reliability and performance of the battery system.

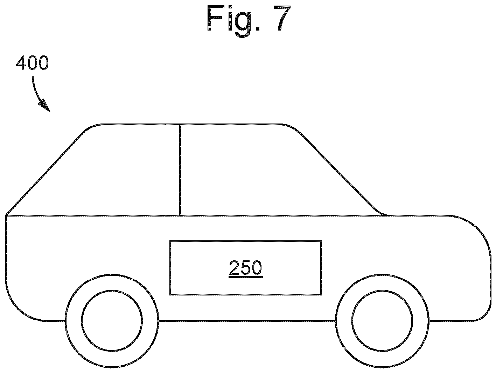

In an example, a vehicle 400 integrates a battery pack 250, as illustrated in FIG. 7. The battery pack 250 is strategically positioned within the vehicle 400 to enhance battery pack perfromance. The integration of the battery pack 250 into the vehicle 400 involves careful consideration of placement to optimize weight distribution and maintain the vehicle's center of gravity, which aids vehicle stability and handling.

The battery pack 250 includes multiple battery arrays that are protected and insulated by silicate sheets and integrated silicate sheets. These materials shield the battery arrays from thermal and mechanical stresses, which enhances the overall safety of the vehicle 400. The deflector portions and silicate deflector portions of the silicate sheets are specifically designed to protect battery terminals, further contributing to the safety features of the vehicle 400.

Moreover, the top surfaces and outside walls of the silicate sheets form a robust enclosure around the battery arrays, minimizing the risk of damage from external impacts or vibrations during vehicle operation. The openings in the silicate sheets are strategically placed to allow for necessary venting of gases, ensuring safe operation of the battery pack 250 under various operating conditions.

The folded silicate sheets provide additional layers of protection and insulation, covering areas of the battery arrays. This configuration not only protects the battery cells but also enhances the thermal management within the battery pack 250, which helps to maintain battery performance and longevity.

The attachment arrangement of the silicate sheets ensures that they are securely fastened to the battery arrays, preventing any displacement. This secure attachment helps to maintain the structural integrity of the battery pack 250 within the vehicle 400.

By integrating the battery pack 250 with these protective features into the vehicle 400, the design enhances the vehicle's performance. This integration ensures that the vehicle 400 can withstand the rigors of operation while protecting the integrity and functionality of the battery pack 250, thereby extending the vehicle's operational life and reducing maintenance needs.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A battery pack comprising a plurality of battery arrays each having an inside wall, an outside wall, a top surface, and respective first and second sidewalls, the battery arrays being arranged in a first row and a second row within the battery pack, such that the battery arrays of the first row and the battery arrays of the second row are positioned such that the inside walls of the battery arrays of the first row and the inside walls of the battery arrays of the second row face together, wherein:
at least a portion of the inside wall and at least a portion of the top surface of an opposing pair of battery arrays of the first and second rows of the plurality of the battery arrays is covered in a silicate sheet.

2. The battery pack of claim 1, wherein the silicate sheet covers substantially all of the inside wall of each array of the opposing pair of battery arrays.

3. The battery pack of claim 1 or claim 2, wherein the silicate sheet which covers at least a portion of the top surface of the pair of battery arrays includes a terminal cover.

4. The battery pack of claim 3, wherein the terminal cover is configured to cover a low voltage terminal of each of the opposing pair of battery arrays.

5. The battery pack of claim 3, wherein the terminal cover is configured to cover a high voltage terminal of each of the opposing pair of battery arrays.

6. The battery pack of any preceding claim, wherein the silicate sheet is folded to cover the inside wall and at least a portion of the top surface of each of the opposing pair of battery arrays.

7. The battery pack of any one of claims 1-6, wherein the silicate sheet which covers a first array of the opposing pair of battery arrays is the same sheet which covers a second array of the opposing pair of battery arrays.

8. The battery pack of claim 7, wherein the silicate sheet is folded to cover the inside walls and at least a portion of the top surfaces of each of the first and second arrays of the opposing pair of battery arrays.

9. The battery pack of any preceding claim further comprising a base plate on which each of the battery arrays is positioned, and wherein the silicate sheet which covers the inside wall of each array reaches substantially all of the way to the base plate.

10. The battery pack of any preceding claim, wherein each opposing pair of battery arrays of the first and second rows of the plurality of the battery arrays is covered in a silicate sheet.

11. The battery pack of any preceding claim, wherein the silicate sheet extends to cover at least a portion of the respective first and second sidewalls of each of the opposing pair of battery arrays.

12. The battery pack of any preceding claim, wherein the silicate sheet is a mica sheet.

13. The battery pack of claim 12, wherein the terminal cover is formed of mica.

14. The battery pack of claim 12 or claim 13, wherein the mica sheet further includes mica tape where the mica sheet is folded.

15. A vehicle comprising the battery pack of any one of claims 1-14.
